# EUROPEAN PATENT APPLICATION

(11) **EP 4 822 967 A1**
(43) Date of publication of application: **14.10.2026**
(21) Application number: 26158478.3
(22) Date of filing: 13.02.2026
(51) Int. Cl.: H02M 1/00, H02M 1/42, H02M 7/162, H02M 1/12

(54) **CONVERTER SYSTEM AND CONTROL METHOD THEREOF**

(30) Priority: 14.02.2025 US 202519053872
(71) Applicant: DELTA ELECTRONICS, INC., 11491 Taipei (TW)
(72) Inventor: Anurag, Anup, Morrisville, NC 27560 (US); Zhang, Chi, Morrisville, NC 27560 (US); Barbosa, Peter Mantovanelli, Taoyuan City 320023 (TW)
(74) Representative: Uexküll & Stolberg

(57) **Abstract**

A converter system (1) includes an AC source (Vac), a DC output (Vdc), a switching circuit, a boost inductor (L_{boost}), a grid inductor (L₂), a ZVS inductor (L_{ZVS}), a ZVS capacitor (C_{ZVS}), and a controller (2). The switching circuit includes a first to fourth switches (S1, S2, S3, S4). The first switch (S1) and the third switch (S3) are electrically connected in series, and there is a first node (A) between the first switch (S1) and the third switch (S3). The second switch (S2) and the fourth switch (S4) are electrically connected in series, and there is a second node (B) between the second switch (S2) and the fourth switch (S4). The ZVS inductor (L_{ZVS}) and the ZVS capacitor (C_{ZVS}) are electrically connected in series between the first node (A) and the second node (B) to form a ZVS branch (11). The controller (2) controls the converter system (1) to transit between a unipolar switching mode and a phase-shift switching mode according to a duty cycle of the switching circuit.

## Description

### FIELD OF THE INVENTION

The present disclosure relates to a converter system and a control method thereof, and more particularly to a converter system and a control method thereof capable of achieving zero voltage switching through mode transition.

### BACKGROUND OF THE INVENTION

For a variety of applications like solid-state transformers, renewable energy integration with grid, on-board chargers, electric vehicle charging infrastructure etc., AC/DC converters are used as the active front-end converter for power factor correction (PFC). Traditional PFC circuits are generally operated in hard-switching conditions which leads to high amount of switching losses. Hard-switched operation is depicted as a phenomenon in which there is a large overlap of voltage across a device and the current through the device during the switching transition. This causes a power loss during the switching transition which limits the switching frequency of devices since the power devices can dissipate a limited amount of power, and these power losses decrease the efficiency of the system.

Limiting the switching frequency of the power devices to maintain a good efficiency leads to larger number of magnetic elements to inject the same quality of current into the load or grid. In fact, the switching frequency is one of the optimization parameters in determining the size and losses of the inductor. Generally, it is observed that higher switching frequencies are preferred to reduce the size of the inductor, but optimizations are carried out for the maximum switching frequency to ensure that both the inductor as well as the power semiconductor device do not experience high amounts of losses.

It is now established that higher switching frequencies are preferred for the power semiconductor devices to reduce the size of the magnetic components while maintaining high efficiencies. Hard-switched converters have the inherent limitation in increasing the switching frequency of operation. To overcome this limitation, it is imperative to operate the devices in a soft-switching manner. In a soft-switching manner, the voltage across the switch and the current through the switch do not overlap with each other during the switching transition, but one of them becomes zero before the switching transition. A zero voltage before the transition is termed as the zero-voltage switching (ZVS), and a zero current before the switching transition is termed as zero-current switching (ZCS). With the soft-switching manner, the switching losses in a power converter is greatly reduced as compared to a hard-switching manner.

A lot of soft-switching techniques for AC/DC converters have been reported in the literature, which can be divided into broadly two categories: with additional active circuits, and with design changes/additional passive circuits. Generally achieving soft-switching with additional active circuits are not preferred due to the additional reliability challenges it brings along with it.

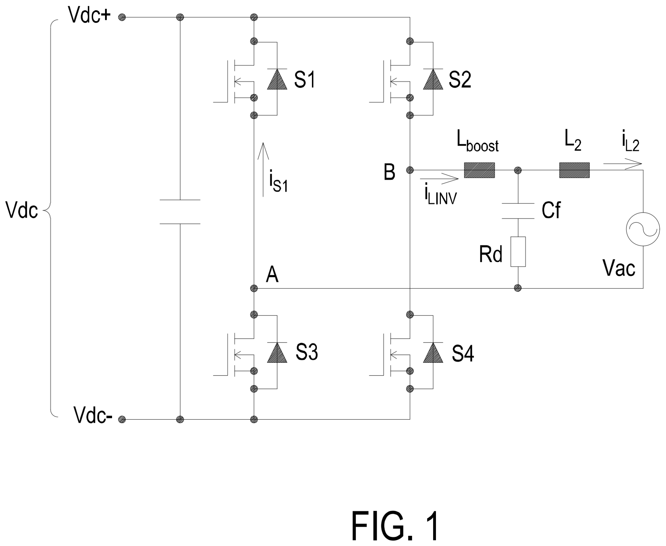

With passive circuits solutions, a technique called as the triangular current mode (TCM) control is used in the literature. The technique is derived from the conventional full-bridge single-phase inverter, as shown in FIG. 1. The main advantage of this technique is that this does not need any additional components. The inductor is designed in a way to increase the current ripple seen by the boost inductor L_{boost} and consequently the current ripple is more than 100%. The high current ripple through the inductor forces the current to be negative (with the antiparallel diode conducting) when the switches are switched. Since the current is forced through the switch before switching, the switch achieves ZVS.

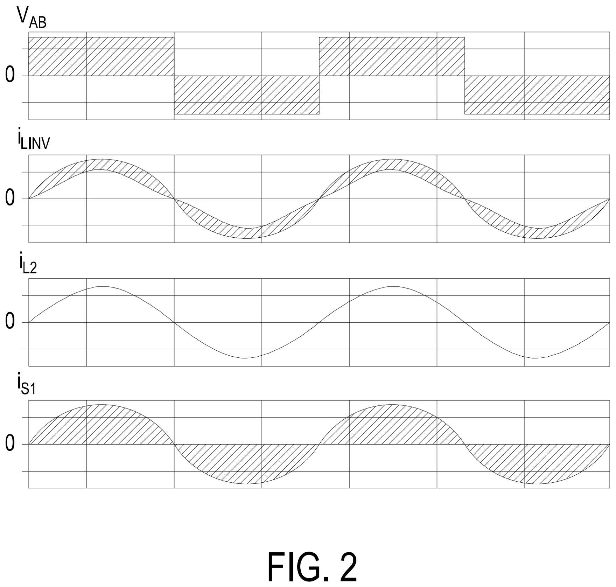

While this technique is simple to use without the need of any additional active or passive elements, it has a few drawbacks. Firstly, due to the high inductor current ripple, the inductor needs to carry twice the peak current, which makes the physical design of the inductor quite challenging, as shown in FIG. 2. Since the inductor needs to carry both the high frequency and the low frequency currents, the physical design becomes sub-optimal. From the perspective of designing the core, cores having high saturation flux density such as nanocrystalline or amorphous have high core losses at high switching frequencies. Core materials like ferrite which offers significantly lower core losses are limited in the peak saturation flux density. Due to the contrasting requirements, ferrite cores are generally used which leads to a sub-optimal design. Also, typically with TCM control, the circuits need to be interleaved to generate a high quality sinusoidal current after the filtering elements.

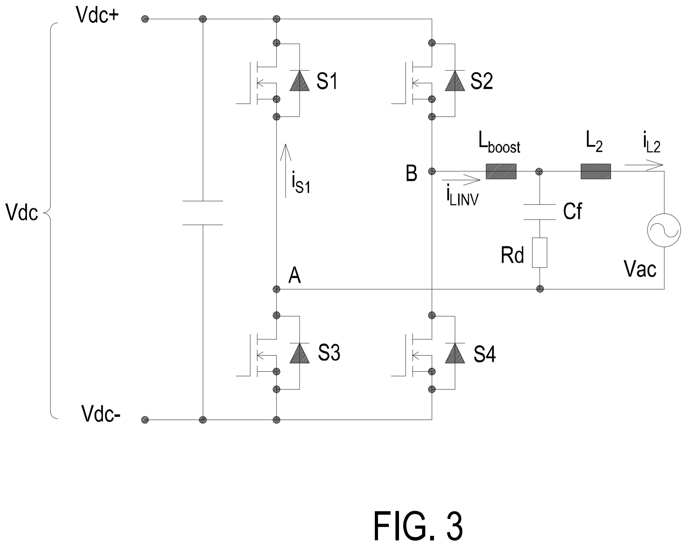

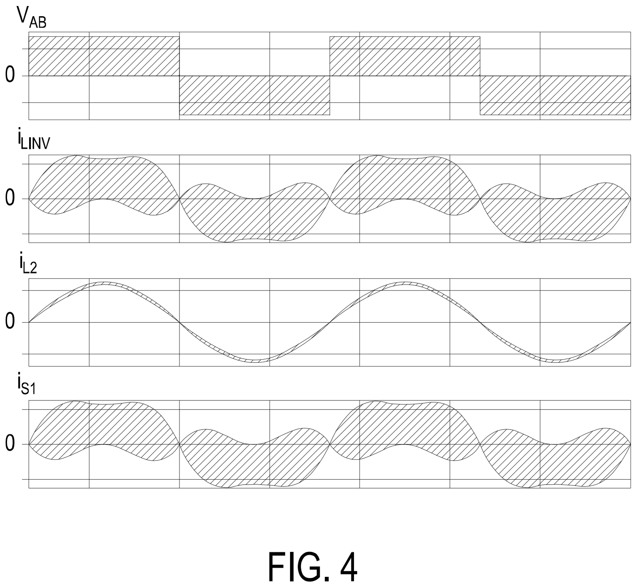

To mitigate these issues, an integrated triangular current mode (iTCM) control for converter has been shown in the literature. In this case, the boost inductor is divided into two separate branches, one branch (L_{boost}) for carrying most of the low frequency current and the other branch (Lzvs) for carrying most of the high frequency current. This is depicted in FIG. 3. The advantages for the iTCM control converter come from the fact that since the inductor is now divided into two parts, the physical design of the inductors can be carried out on basis of the current it carries. The branch with boost inductor L_{boost} carries most of the low frequency current can be designed with a high saturation flux density core such as amorphous or nanocrystalline. The branch with inductor Lzvs carries most of the high frequency currents can be aptly designed with ferrite cores. This gives an optimal design of both the inductors. Further, since the boost inductor L_{boost} operates with a low current ripple, filtering this current to inject high quality sinusoidal current in the grid is much simpler. Also, due to this reason, the iTCM control does not necessarily require interleaving. The respective waveforms showcasing the high frequency and low frequency currents through the individual inductors are shown in FIG. 4.

Since the iTCM control do not use additional active devices, the voltages across the inductor Lzvs and capacitor Czvs are determined solely by the modulation of the main switches (switches S1-S4). The modulation of the main switches needs to be carried out in such a way that the voltage generated across the mid-points follow the grid/load voltage. This is necessary to have effective power transfer between the DC side and the AC side. It should be noted that the current injected into the load/grid do not affect the modulation of the switches.

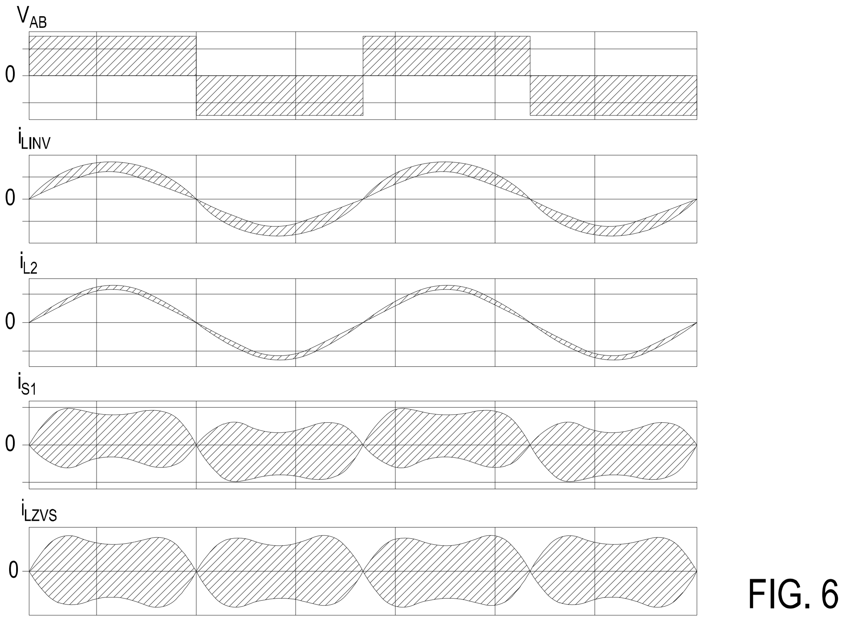

The effect of the modulation is directly reflected on the voltage seen across the ZVS inductor L_{ZVS} and the boost inductor L_{boost}. The voltage across the inductor is shown in FIG. 6. The AC/DC converter can be operated in a unipolar switching mode, a phase-shift switching mode or a bipolar switching mode. In a unipolar or a phase-shift switching mode, the output voltage of the inverter, which is the voltage between the two mid-points of the bridge legs transitions from either +VDC to 0 or 0 to -VDC. In the bipolar switching mode, the output voltage of the inverter transitions directly from +VDC to -VDC. Generally, the unipolar switching mode is preferred since in this method, the effective frequency across the inductors can be doubled.

At certain points close to the zero crossing of the grid/load voltage (sine wave), the effective voltage is close to zero. The inherent current ripple across the inductors originates from the voltage across the inductors. When a unipolar switching mode is used, the current ripple across the inductor reduces significantly. In certain cases, the frequency of operation can be changed to manipulate the current ripple value, but when the effective voltage is close to zero, it is impractical to change the frequencies to accommodate for the current ripple. If the current ripple is not enough, there is a tendency of the converter to lose soft-switching in those time intervals.

For unity power factor operation, where the current injected into the grid or supplied to the load has no phase-shift with the voltage, the effective voltage across the inductor is inherently zero and is very close to the zero crossing of the current. For the operation of the converter in this unity power factor operation, the efficiency is not affected much due to the loss of soft-switching. Due to this, in the literature, typically a conventional unipolar switching mode is used. However, the loss of soft-switching has other disadvantages that include higher differentiation of voltage with respect to time on the switches which requires the system to be robust enough to handle the differentiation of voltage with respect to time even during the small time interval.

For non-unity power factor operation, the current flowing through the inductor has a phase-shift with the voltage. Since the "zero-ripple" area is dependent only on the voltage waveform, it is not necessary for the current to be close to zero. In certain cases, where the phase-shift is close to 90 degrees, the current is at the peak value. Loss of soft-switching even in a small interval at the peak of the current, or even at non-zero currents can lead to significant degradation in efficiencies and can lead to electromagnetic interference (EMI) issues owing to the high differentiation of voltage with respect to time of the switches. This calls for a method to ensure soft-switching in the converter system throughout the whole line cycle even during non-unity power factor operation.

Therefore, there is a need of providing a converter system and a control method thereof to obviate the drawbacks encountered from the prior arts.

### SUMMARY OF THE INVENTION

It is an object of the present disclosure to provide a converter system and a control method thereof, in the embodiment of the present disclosure, a concept for operation of converter system under soft-switching conditions throughout the line cycle even for non-unity power factor operation is provided. A converter circuit is used with an additional inductor and capacitor to ensure soft-switching of the individual switches. The system and control method of the embodiment of the present disclosure are designed in such a way as to control the pulses for the switches to inject high quality current into the grid/load. The duty cycle of the pulses of the switches, and the switching frequency of modes are adjusted by the controller.

It is another object of the present disclosure to provide a converter system and a control method thereof, in the embodiment of the present disclosure, a transition sequence is also proposed to have the mode change in a smooth way capable of reducing or even without causing oscillations in the inductor current and the capacitor voltage. In one embodiment, the transition sequence is important since improper transition leads to oscillations in the current which eventually may lead to a loss of soft-switching negating the use of the mode change.

In accordance with an aspect of an embodiment of the present disclosure, there is provided a converter system including an AC source, a DC output, a switching circuit, a boost inductor, a grid inductor, a ZVS inductor, a ZVS capacitor, and a controller. The DC output includes a positive terminal and a negative terminal. The switching circuit includes a first switch, a second switch, a third switch, and a fourth switch, wherein the first switch and the second switch are electrically connected to the positive terminal of the DC output, and the third switch and the fourth switch are electrically connected to the negative terminal of the DC output. The first switch and the third switch are electrically connected in series, and there is a first node between the first switch and the third switch. The second switch and the fourth switch are electrically connected in series, and there is a second node between the second switch and the fourth switch. The boost inductor is electrically connected to the second node. The grid inductor is electrically connected between the AC source and the boost inductor, wherein the AC source is electrically connected to the second node. The ZVS inductor and the ZVS capacitor are electrically connected in series between the first node and the second node to form a ZVS branch. The controller is configured to control the converter system to transit between a unipolar switching mode and a phase-shift switching mode, a bipolar switching mode and the phase-shift switching mode, or the unipolar switching mode and the bipolar switching mode according to a duty cycle of the switching circuit.

In accordance with an aspect of an embodiment of the present disclosure, there is provided a control method of a converter system including steps of: (a) measuring a duty cycle of the converter system when there is a reactive power injection; and (b) determining a transition duty and a frequency when the duty cycle is equal to k, and performing a transition according to the transition duty and the frequency, wherein k is between 0.45 and 0.5, wherein the transition includes at least one of transition from a unipolar switching mode to a phase-shift switching mode, transition from a phase-shift switching mode to the unipolar switching mode, transition from the bipolar switching mode to the phase-shift switching mode, transition from the phase-shift switching mode to the bipolar switching mode, transition from the unipolar switching mode to the bipolar switching mode, and transition from the bipolar switching mode to the unipolar switching mode.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 schematically shows a conventional full bridge circuit which operates as a single-phase voltage source AC/DC converter with a continuous current mode;
FIG. 2 schematically shows the operating waveforms of FIG. 1 for a particular operating point with unipolar switching mode at a unity power factor operation;
FIG. 3 schematically shows a conventional full bridge circuit which operates as a single-phase voltage source AC/DC converter in a triangular current control mode, the circuit diagram of FIG. 3 is the same as the conventional full-bridge circuit as shown in FIG. 1, but the boost inductance value is reduced to have a triangular current mode;
FIG. 4 schematically shows the operating waveforms of FIG. 3 at unity power factor operation;
FIG. 5 schematically shows a conventional full bridge circuit which operates as a single-phase voltage source AC/DC converter in an integrated triangular current control mode, wherein the inductor is separated into two different parts;
FIG. 6 schematically shows the operating waveforms of FIG. 5 with the unipolar switching mode at unity power factor operation;
FIG. 7 schematically shows operating waveforms of FIG. 6 with the unipolar switching mode in the positive AC cycle;
FIG. 8 schematically shows operating waveforms of FIG. 5 with the unipolar switching mode at non-unity power factor operation;
FIG. 9 schematically shows an operating waveform of FIG. 5 with the bipolar switching mode;
FIG. 10A schematically shows a converter system according to an embodiment of the present disclosure;
FIGS. 10B and 10C schematically show the timing diagrams for the unipolar and bipolar switching modes of FIG. 10A, and FIG. 10D schematically shows the trajectory diagrams of FIGS. 10A and 10B;
FIG. 11 schematically shows the transition directly from a unipolar switching mode to a bipolar switching mode at a single operating point;
FIG. 12 schematically shows an operation waveform of FIG. 10A with a phase-shift switching mode;
FIG. 13A and FIG. 13B schematically show the timing diagram and the trajectory diagrams between the normalized ZVS capacitor voltage and the ZVS inductor current for a unipolar switching mode respectively;
FIG. 14A and FIG 14B schematically show the timing and the trajectory diagrams between the normalized ZVS capacitor voltage and the ZVS inductor current for a phase-shift switching mode respectively;
FIG. 15A and FIG 15B schematically show the transition waveforms for a mode transition from the unipolar switching mode to phase-shift switching mode, and vice versa;
FIG. 16 shows the transition point of the converter system of FIG. 10A, wherein one of the parts schematically shows a perfect transition, and the other part schematically shows an imperfect transition; and
FIG. 17 is a schematic flow chart illustrating a control method of a converter system according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

FIG. 1 schematically shows a conventional full bridge circuit which operates as a single-phase voltage source AC/DC converter with a continuous current mode. The boost inductor L_{boost} shown in FIG. 1 is designed for filtering out the current ripple in the converter system and is typically designed for achieving a 30%-40% current ripple. Refer to FIG. 2, as shown in FIG. 2, the simulation waveform for converter system of FIG. 1 is shown for a particular operating point with unipolar switching mode at a unity power factor operation. The current flowing through the boost inductor L_{boost} is designed to have a 20% current ripple on it, and is termed as a continuous current mode. It can be seen that the current i_{S1} flowing through the switch S1 is positive during the positive line cycle and is negative during the negative line cycle. From this, it can be inferred that the switches experience hard-switching operation which leads to switching losses in the switches. These switching losses due to hard-switching limit the switching frequency of the converter system and lead to decreased power density while maintaining high efficiencies.

To facilitate soft-switching of the switches, it is preferable for the current flowing through the switch to be negative before the switch turns on, i.e., the current would ideally flow through the anti-parallel diode before the switch is switched on. This motivates the triangular current mode technique as shown in FIG. 2 where the value of the boost inductor L_{boost} is designed such that the current ripple becomes greater than 100% for ensuring a negative current during the positive half-cycle, which is shown in FIG. 3. Refer to FIGS. 3 and 4, for the same switching voltage (V_{AB}) as FIGS. 1 and 2, the current flowing through the boost inductor L_{boost} has a current ripple of greater than 100% for ensuring that the switch experiences the same current and have soft-switched transitions. The downside of this technique lies in the fact that the root mean square (RMS) current through the switch as well as the boost inductor L_{boost} increases which results in increased conduction losses. Also, since a high current ripple is present in the boost inductor L_{boost}, the capacitive filtering requirement becomes higher as compared to a conventional continuous current mode. However, owing to soft-switching operation, the switching frequency in triangular current mode can be increased significantly as compared to continuous current mode. Another significant downside that occurs for the triangular current control mode lies in the physical design of the boost inductor L_{boost}. As shown in the simulation waveform in FIG. 4, it can be seen that the boost inductor L_{boost} carries both the high frequency and the low frequency current which make the physical inductor design challenging.

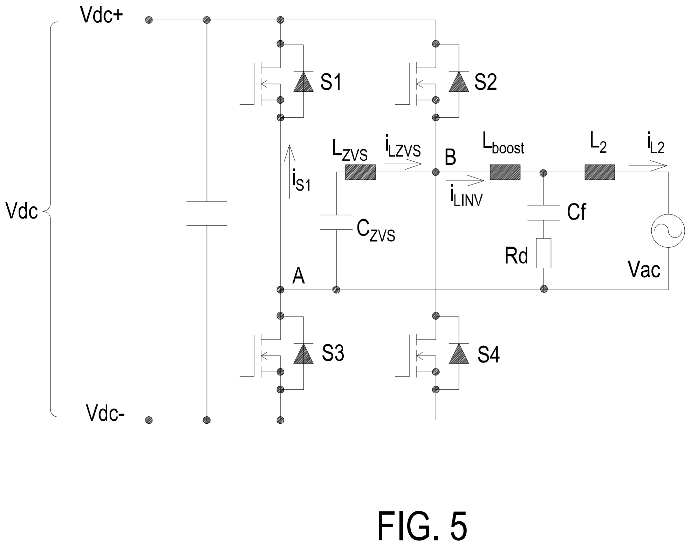

Refer to FIG. 5, an integrated triangular current mode (iTCM) control technique is introduced where the boost inductor L_{boost} is divided into two separate physical inductors (L_{boost} and L_{ZVS}) as shown in FIG. 5. In this embodiment, the converter system further includes an inductor Lzvs and a capacitor Czvs electrically connected in series to the boost inductor L_{boost}. The values are designed in such a way that the boost inductor L_{boost} carries the same current as a continuous current mode, and the high frequency current is carried by the ZVS inductor (Lzvs). It can be seen that the current i_{S1} of the switch S1 still remains the same as that of the TCM control mode shown in FIGS. 3 and 4, which entails a soft-switching operation of the switches. The waveforms for operation of the converter system are shown in FIG. 6 and it is seen that the current i_{Linv} flowing through the boost inductor L_{boost} follows the same pattern as the one in the continuous current mode shown in FIG. 2, while the current i_{S1} flowing through the switch S1 is same as that of the triangular current control mode shown in FIG. 4.

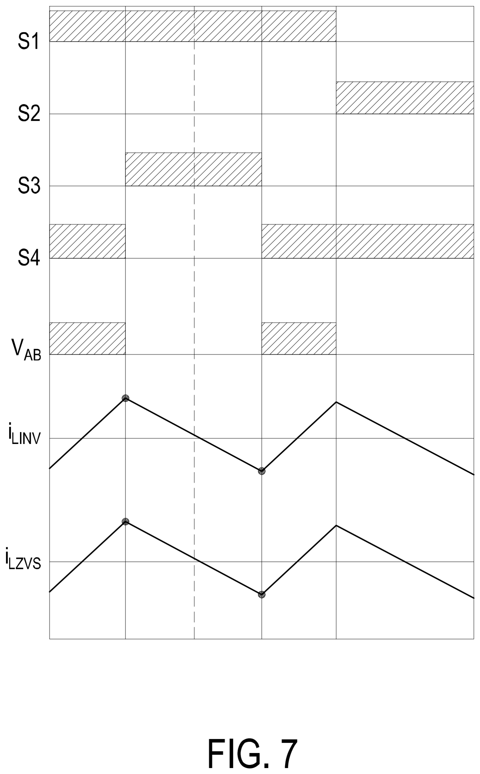

FIG. 7 schematically shows operating waveforms of FIG. 6 with the unipolar switching mode in the positive AC cycle. In the unipolar switching mode shown in FIG. 7, it can be seen that the center of the gate voltage for switch S1 aligns with the center of the gate voltage for switch S3. This alignment causes a symmetrical voltage waveform across the switching voltage V_{AB} between the first node A and the second node B and leads to the symmetrical currents in the inductors (the current i_{Linv} through the boost inductor L_{boost} and the current i_{LZVS} through the ZVS inductor) as shown. For an AC/DC converter system operating at unity power factor operation, the unipolar switching mode shown in FIG. 7 helps in achieving soft-switching throughout the line cycle apart from a few switching cycles close to the line cycle. The reason of that the soft-switching is lost is due to the fact that the average voltage across the inductor becomes close to zero and it becomes impractical to adjust the switching frequency to gain the required negative current for achieving soft-switching.

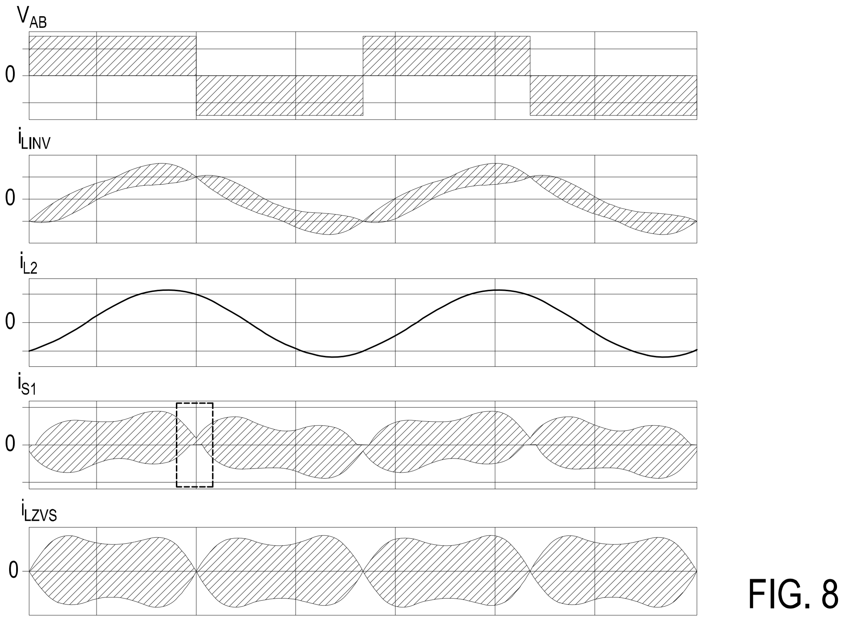

FIG. 8 shows another embodiment during the non-unity power factor operation where the current ripple becomes zero at a point where the absolute value of the current is non-zero. This leads to the loss of soft-switching at that point, and generally this leads to a loss in efficiency since the switch loses soft-switching while switching higher current values.

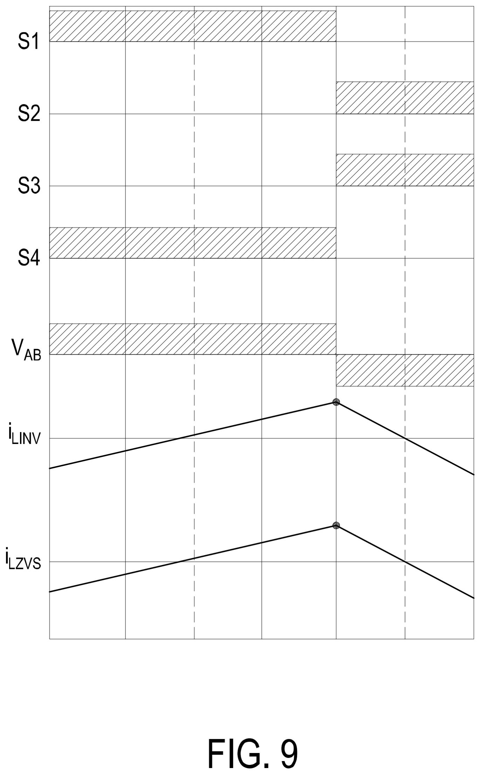

FIG. 9 shows a bipolar switching mode where an inductor current ripple can be non-zero even when the average voltage V_{AB} across the first node A and the second node B is zero. In this mode, as shown in FIG. 9, the gate signal for switch S1 is phase-shifted with the gate signal of switch S2 by about 180 degrees. The disadvantage of this mode is that the inductor current ripple is twice as compared to the unipolar switching mode technique, and it leads to increased size of the inductor if the bipolar switching mode is used since it does not change the effective switching frequency. However, the advantage comes from the fact that the inductor current ripple can be changed.

One of the techniques to achieve soft-switching near these zero-ripple points can be made from the fact that if the unipolar switching mode is changed to bipolar switching mode during these intervals. One of the important factors to note is how the transition should be carried out.

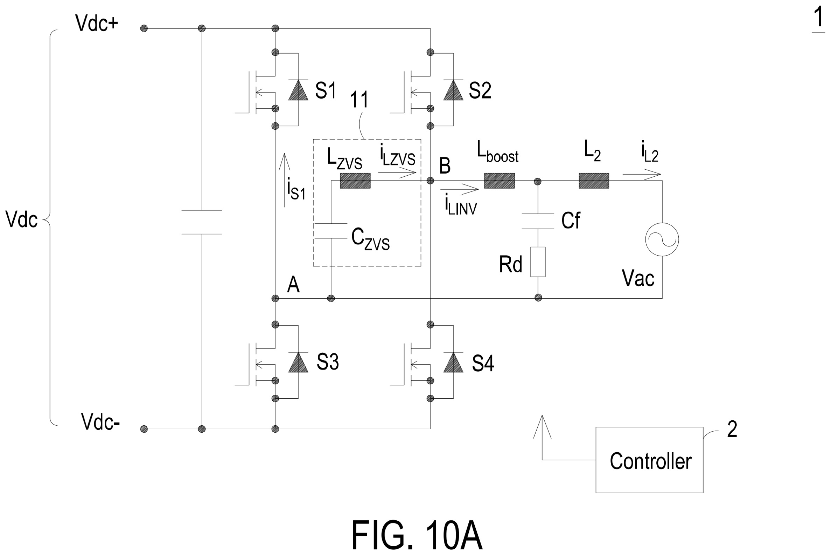

FIG. 10A schematically shows a converter system 1 according to an embodiment of the present disclosure. As shown in FIG. 10A, the converter system 1 includes a DC output Vdc, an AC source Vac, a switching circuit, a boost inductor L_{boost}, a grid inductor L₂, a ZVS inductor L_{ZVS}, a ZVS capacitor Czvs and a controller 2. The switching circuit includes a first switch S1, a second switch S2, a third switch S3 and a fourth switch S4. The first switch S1 and the second switch S2 are electrically connected to a positive terminal Vdc+ of the DC output Vdc, and the third switch S3 and the fourth switch S4 are electrically connected to a negative terminal Vdc-of the DC output Vdc. The first switch S1 and the third switch S3 are electrically connected in series, and there is a first node A between the first switch S1 and the third switch S3. The second switch S2 and the fourth switch S4 are electrically connected in series, and there is a second node B between the second switch S2 and the fourth switch S4. The boost inductor L_{boost} is electrically connected to the second node B, the AC source Vac is electrically connected to the first node A, and the grid inductor L₂ is electrically connected between the AC source Vac and the boost inductor L_{boost}. The ZVS inductor L_{ZVS} and the ZVS capacitor Czvs are electrically connected in series between the first node A and the second node B to form a ZVS branch 11. The controller 2 controls the converter system 1 to transit between a unipolar switching mode and a phase-shift switching mode according to a duty cycle k of the switching circuit, wherein k is between 0.45 and 0.5. The controller 2 determines a transition duty and a frequency of a transition from the unipolar switching mode to the phase-shift switching mode, and determines a transition duty and a frequency of a transition from the phase-shift switching mode to the unipolar switching mode.

In the embodiment of the present disclosure, the unipolar switching mode, phase-shift switching mode, and bipolar switching mode are determined based on at least one of phase-shift value between the gate pulses of the switch S1 and the switch S2 and phase-shift value between the gate pulses of the switch S3 and the switch S4. When the phase-shift value is 0 degrees or approximately 0 degrees, the converter system 1 operates in the unipolar switching mode. When the phase-shift value is 180 degrees or approximately 180 degrees, the converter system 1 operates in the bipolar switching mode. For any other phase-shift value, the operation of the converter system 1 operates in the phase-shift switching mode.

In the embodiment of the present disclosure, the controller of the converter system controls to transit between a unipolar switching mode and a phase-shift switching mode according to a duty cycle k of the switching circuit of the converter system. Therefore, all the switches of the switching circuit may ensure soft-switching, thereby achieving ZVS.

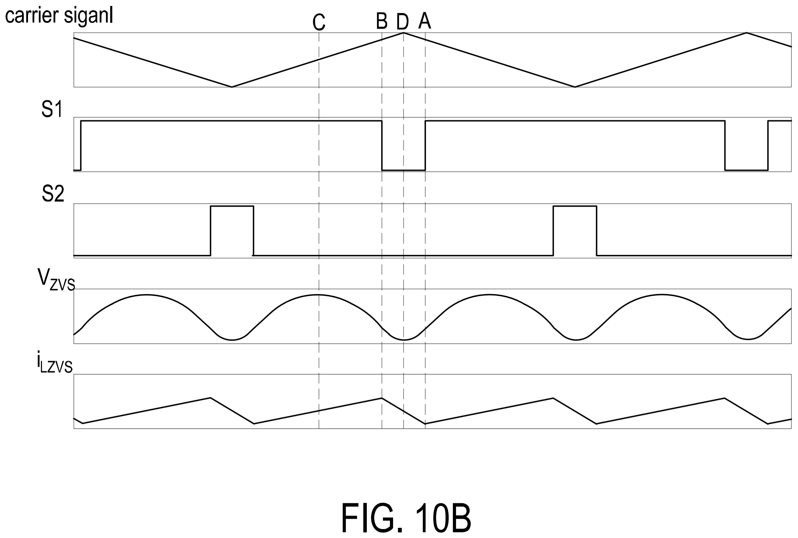

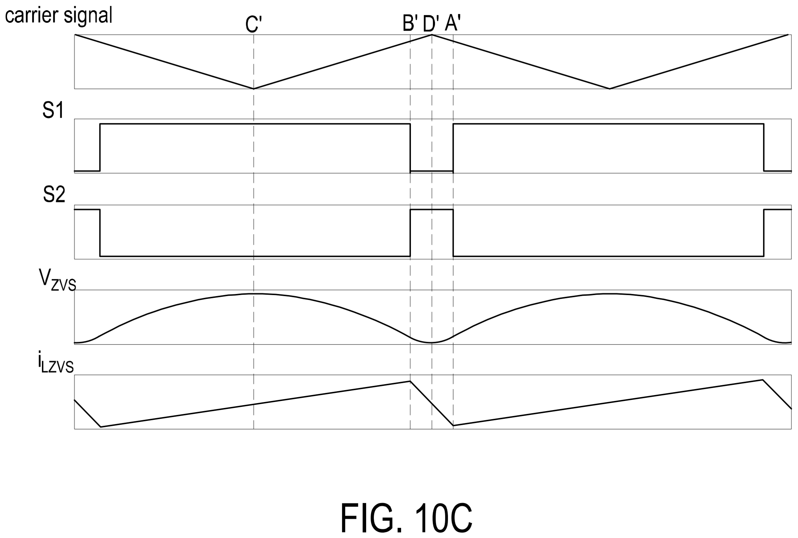

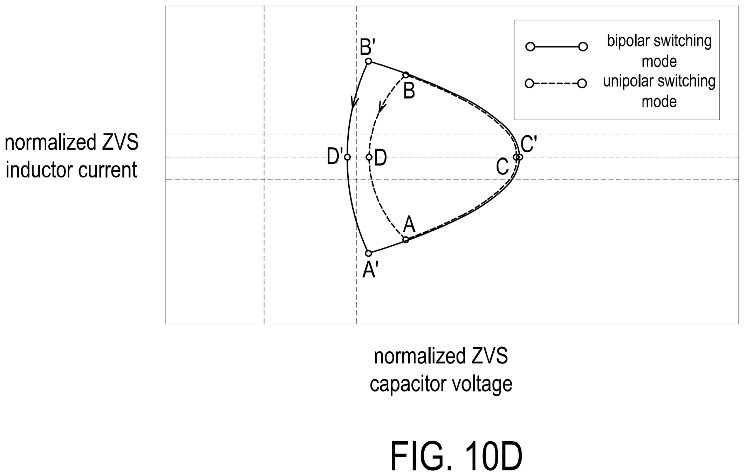

Refer to FIG. 10A again, in an embodiment, the controller 2 may control the converter system 1 to transit between a unipolar switching mode and a bipolar switching mode. In this embodiment, the voltage Vzvs across the ZVS capacitor Czvs and the current i_{LZVS} flowing through ZVS inductor Lzvs of the converter system 1 in the unipolar switching mode are normalized into a unipolar normalized capacitor voltage V_{NZVS} and a unipolar normalized inductor current i_{NLZVS} respectively by the controller 2. The voltage Vzvs across the ZVS capacitor Czvs and the current i_{LZVS} flowing through ZVS inductor Lzvs of the converter system 1 in the bipolar switching mode are normalized into a bipolar normalized capacitor voltage V_{NZVS} and a bipolar normalized inductor current i_{NLZVS} respectively by the controller 2. The controller 2 obtains a unipolar trajectory according to the unipolar normalized capacitor voltage V_{NZVS} and the unipolar normalized inductor current i_{NLZVS}, and obtains a bipolar trajectory according to the bipolar normalized capacitor voltage V_{NZVS} and the bipolar normalized inductor current i_{NLZVS}. The controller 2 determines a transition point of a transition of the unipolar switching mode and the bipolar switching mode according the unipolar trajectory and the bipolar trajectory. In specific, the controller 2 determines the transition point of the transition according to an overlap trajectory of the unipolar trajectory and the bipolar trajectory. The implementation of the mentioned transition is exemplified as follow and shown in FIGS. 10B, 10C and 10D.

FIGS. 10B and 10C schematically show the timing diagrams for the unipolar and bipolar switching modes showcasing detailed waveforms for the gate pulses for two switches (switches S1 and S2) and the voltage Vzvs across the ZVS capacitor Czvs and current i_{LZVS} flowing through ZVS inductor L_{ZVS} of the converter system 1 of FIG. 10A. FIG. 10D schematically shows the transition from the timing diagrams of FIGS. 10B and 10C into trajectory diagrams with the normalized inductor current i_{NLZVS} on the y-axis and the normalized capacitor voltage V_{NZVS} on the x-axis respectively. Refer to FIGS. 10A, 10B. 10C and 10D, it is seen that in this embodiment, the voltage Vzvs and the current i_{LZVS} in FIG. 10B are normalized respectively and the unipolar trajectory of the unipolar switching mode are obtained accordingly which is shown in FIG. 10D, and the points A, B, C, D in FIG. 10B are corresponding to points A, B, C, D in FIG. 10D. The voltage Vzvs and the current i_{LZVS} in FIG. 10C are normalized respectively and the bipolar trajectory of the bipolar switching mode are obtained accordingly which is shown in FIG. 10D, and the points A', B', C', D' in FIG. 10C are corresponding to points A, B, C, D in FIG. 10D. The unipolar trajectory and the bipolar trajectory overlap each other at least at a few points. In the present embodiment, in order to achieve a smooth transition from the unipolar to the bipolar switching modes or from the bipolar to the unipolar switching modes, a jump in the trajectory needs to be avoided and the transition needs to be carried out on an overlap point. For a transition from the unipolar switching mode to the bipolar switching mode, the transition point is identified as point A to B' shown in FIG. 10D, and from the trajectory, it is evident that the duty cycle (D) needs to change to move to the new trajectory. For the transition cycle, the duty cycle is given by equation (1) shown below, $\begin{matrix}D \left(transition\right) = D \left(A to B\right) + D \left(B to B′\right) \\ = \frac{1}{2} ∗ \left(D\left(A to B\right)+D\left(A′ to B′\right)\right)\end{matrix}$ (1) Wherein the D(transition) represents that the duty cycle during the transition process, D(A to B), D(B to B'), D(A to B) and D (A' to B') represent the duty cycle of transition points respectively.

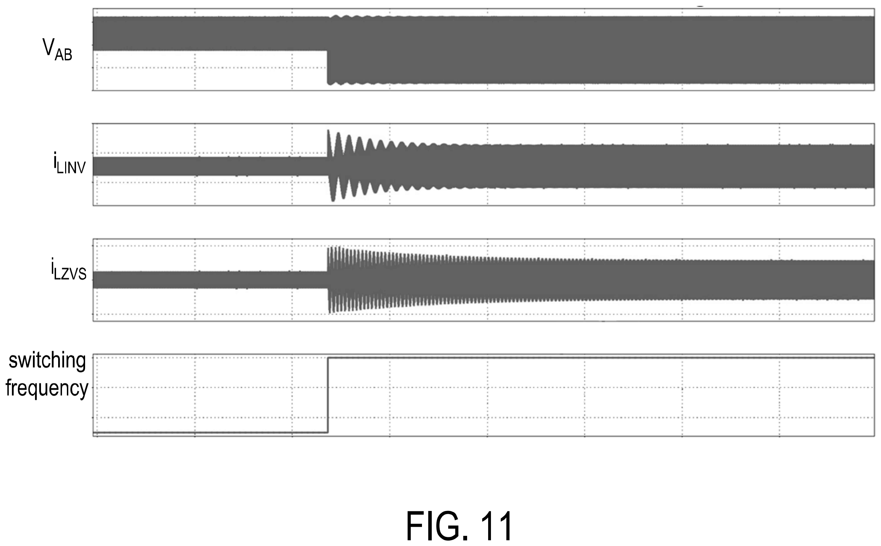

Refer to FIG. 10D again, in order to achieve a smooth transition, in the embodiment, the transition needs to happen at point A and the duty cycle for a next cycle is calculated according to the equation (1). FIG. 11 shows the transition from a unipolar switching mode to a bipolar switching mode for a duty cycle close to 50% in a DC/DC mode which emulates a single point of transition in the converter system 1 of FIG. 10A. It is seen that while the transition is relatively smooth, the current ripple is high even when the switching frequency is increased closed to three times of that for the unipolar switching mode. While the high current ripple helps in achieving the required soft-switching in the switches, it increases the peak inductor current as well as the RMS current through the device and the inductor itself which is not desirable. It is required to have a better mode technique to control the actual peak current as well as limit the switching frequency while maintaining a smooth transition from the unipolar switching mode to other switching mode.

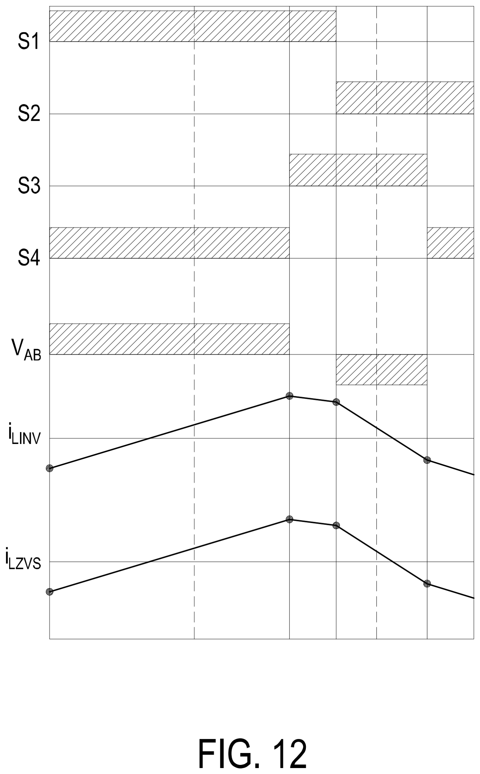

FIG. 12 shows a phase-shift switching mode where the phase-shift between the gate pulses of switches S1 and S2 is between 0 and 180 degrees. Due to the phase-shift, it is seen that the current i_{Linv} flowing through the boost inductor L_{boost} as well as the current i_{LZVS} flowing through the ZVS inductor Lzvs have two changes in the slopes. Due to this phenomenon, the current ripple in the inductor has an additional control method in terms of the phase-shift. However, to have a smooth transition, it is important to determine the suitable phase-shift and the switching frequency to where the transition should occur. In addition, achieving soft-switching for all the switches remains an important consideration. In the embodiment, it is still necessary to achieve soft-switching for all the switches.

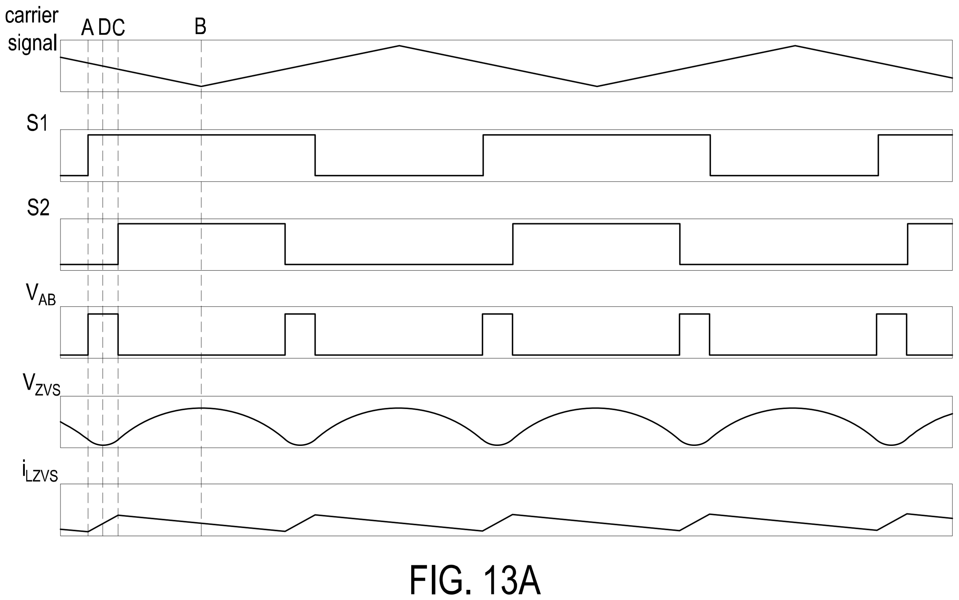

FIG. 13A schematically shows the timing diagram of the converter system 1 of FIG. 10A with integrated triangular current control mode for a unipolar switching mode at a duty cycle close to 0.5. In FIG. 13A, the x-axes are time respectively, and the y-axes are the corresponding values of carrier signal, S1, S2, V_{AB}, V_{ZVS}, and i_{LZVS} respectively. The important parameters to note is the voltage Vzvs across the ZVS capacitor Czvs and the current i_{LZVS} flowing through the ZVS inductor Lzvs. The voltage Vzvs across the ZVS capacitor Czvs and the current i_{LZVS} flowing through ZVS inductor Lzvs of the converter system 1 in the unipolar switching mode are normalized into a unipolar normalized capacitor voltage V_{NZVS} and a unipolar normalized inductor current i_{NLZVS} respectively by the controller 2. The controller 2 obtains a first circle of the unipolar switching mode according to the unipolar normalized capacitor voltage V_{NZVS}, and obtains a second circle according to the unipolar normalized inductor current i_{NLZVS}.

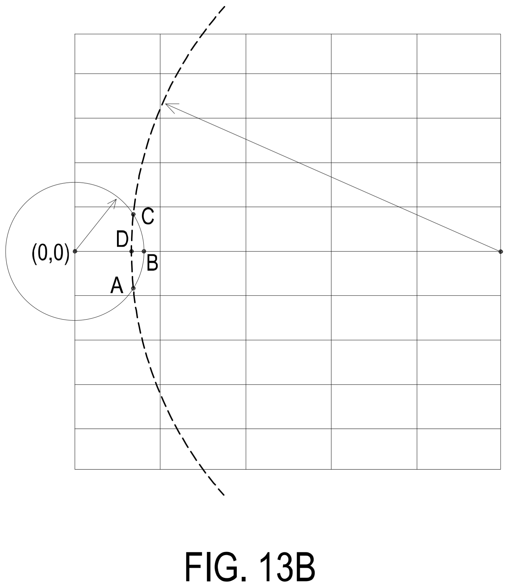

The timing diagram of the unipolar normalized capacitor voltage V_{NZVS} and the unipolar normalized i_{NLZVS} of FIG. 13A are converted to a trajectory diagram as shown in FIG. 13B. FIG. 13B shows the state-space figure which gives the relation between the normalized V_{NZVS} and i-_{NLZVS}. The trajectory plot is between the unipolar normalized capacitor voltage V_{NZVS} of the ZVS capacitor Czvs on the y-axis and the unipolar normalized inductor current i_{NLZVS} of the ZVS inductor L_{ZVS} on the x-axis. In this embodiment, the voltage Vzvs and the current i_{LZVS} in FIG. 13A are normalized respectively, and the unipolar trajectory of the unipolar switching mode are obtained accordingly which is shown in FIG. 13B, and the points A, B, C, D in FIG. 13A are corresponding to points A, B, C, D in FIG. 13B. It is seen that the trajectories are different parts of a circle. The first arc C-B-A is part of the first circle (shown by a solid line in FIG. 13B) with equation (2) shown below, $\begin{matrix}Center : \left(0, 0\right) \\ Radius \left({r}_{unit 1}^{2}\right) = {I}_{a 11 , uni}^{2} + {V}_{C 0 \left(uni\right)}^{2}\end{matrix}$ (2) Where *r*_{*uni*1} is a normalized radius of the first circle, *I*_{*a*11*,uni*} is a normalized current of the current i_{LZVS} at the point C shown in FIG. 13A, and *V*_{*C*0(*uni*)} is a normalized capacitor voltage of the voltage V_{ZVS} at the point C shown in FIG. 13A.
The second arc A-D-C is part of the second circle (shown by a dotted line in FIG. 13B) with equation (3) shown below, $\begin{matrix}Center : \left({V}_{C 0 \left(uni\right)}, 0\right) \\ Radius \left({r}_{unit 2}^{2}\right) = {I}_{a 11 , uni}^{2} + {\left({V}_{C 0 \left(uni\right)}-{V}_{INN}\right)}^{2}\end{matrix}$ (3) Wherein *V_{INN}* is a peak value of the switching voltage V_{AB} which is equal to the DC-link voltage for a single-phase two level inverter structure, and *r*_{*uni*2} is a normalized radius of the second circle.

The controller 2 determines a transition point of the unipolar switching mode and the bipolar switching mode which happens at the point A based on equation (1).

The first circle and the second circle form a part of the unipolar normalized trajectory.

In the embodiment, the unipolar switching mode, phase-shift switching mode, and bipolar switching mode are determined based on the phase-shift value between the gate pulses of the switch S1 and the switch S2, or between the gate pulses of the switch S3 and the switch S4. When the phase-shift value is 0 degrees or approximately 0 degrees, the operation corresponds to the unipolar switching mode. When the phase-shift value is 180 degrees or approximately 180 degrees, the operation corresponds to the bipolar switching mode. For any other phase-shift value, the operation is defined as the phase-shift switching mode.

In one embodiment, the controller 2 is configured to control the converter system 1 to operate in the unipolar switching mode when the phase-shift value is 0 degrees or approximately 0 degrees. In one embodiment, the controller 2 is to control the converter system 1 to operate in the bipolar switching mode when the phase-shift value is 180 degrees or approximately 180 degrees. In one embodiment, the controller 2 is configured to control the converter system 1 to operate in the phase-shift switching mode when the phase-shift value is not 0 or 180 degrees.

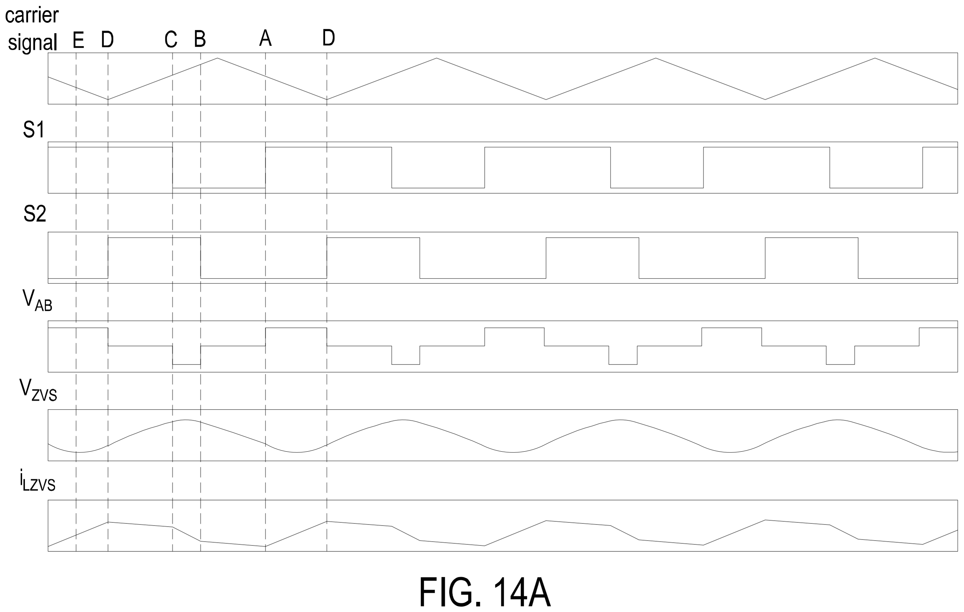

With the phase-shift switching mode technique, as shown in FIG. 14A, a timing diagram schematically shows different relevant points. The voltage Vzvs across the ZVS capacitor Czvs and the current i_{LZVS} flowing through ZVS inductor Lzvs of the converter system 1 in the phase-shift switching mode are normalized into a phase-shift normalized capacitor voltage V_{NZVS} and a phase-shift normalized inductor current i_{NLZVS} respectively by the controller 2.

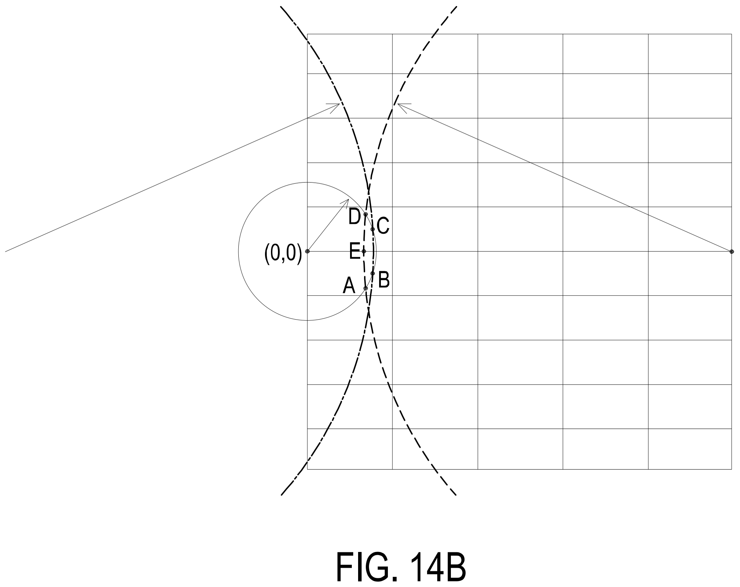

Similar to the previous embodiment of the unipolar switching mode, in the phase-shift switching mode in this embodiment, the timing diagram is converted to a trajectory diagram as shown in FIG. 14B. In FIG. 14A, the x-axes are time respectively, and the y-axes are the corresponding values of carrier signal, S1, S2, V_{AB}, Vzvs, and i_{LZVS} respectively. FIG. 14B shows the state-space figure which gives the relation between the normalized V_{NZVS} and i_{NLZVS}. In this embodiment, the voltage Vzvs and the current i_{LZVS} in FIG. 14A are normalized respectively and the phase-shift trajectory of the phase-shift switching mode are obtained accordingly which is shown in FIG. 14B, and the points A, B, C, D and E in FIG. 14B are corresponding to points A, B, C, D and E in FIG. 14A. In this embodiment, the trajectory is a combination of three circles. A first circle with covers the arc D-C and the arc B-A is characterized by equation (4) shown below, $\begin{matrix}Center : \left(0, 0\right) \\ Radius \left({r}_{PS 1}^{2}\right) = {I}_{a 11 , PS}^{2} + {V}_{C 1 \left(PS\right)}^{2}\end{matrix}$ (4) Wherein *r*_{*ps*1} is a radius of the first circle which covers the trajectory from points D to C and points B to A. *I*_{*a*11*,PS*} is a normalized current of the current i_{LZVS} at the point D shown in FIG. 14A, and *V*_{*c*1(*PS*)} is a normalized capacitor voltage of the voltage Vzvs at the point C shown in FIG. 14A. The second circle which covers the arc from C-B is characterized by equation (5) shown below, $\begin{matrix}Center : \left(-{V}_{INN},0\right) \\ Radius \left({r}_{PS 2}^{2}\right) = {I}_{a 12 , PS}^{2} + {\left({V}_{C 1 \left(PS\right)}+{V}_{INN}\right)}^{2}\end{matrix}$ (5) Wherein *V_{INN}* is a peak value of the switching voltage V_{AB}, *r*_{*ps*2} is a radius of the second circle which covers the trajectory from points C to B. *I*_{*a*12,*PS*} is a normalized current of the current i_{LZVS} at the point C shown in FIG. 14A, and *V*_{*c*1(*PS*)} is a normalized capacitor voltage of the voltage Vzvs at the point C shown in FIG. 14A.
The third circle which covers the arc from A-E-D is characterized by equation (6) shown below, $\begin{matrix}Center : \left({V}_{INN}, 0\right) \\ Radius \left({r}_{PS 3}^{2}\right) = {I}_{a 11 , PS}^{2} + {\left({V}_{C 0 \left(PS\right)}-{V}_{INN}\right)}^{2}\end{matrix}$ (6) Wherein *r*_{*ps*3} is a radius of the third circle which covers the trajectory from points A to E to D. *I*_{*a*11*,PS*} is a normalized current of the current i_{LZVS} at the point C shown in FIG. 14A, and *V*_{*c*0(*PS*)} is a normalized capacitor voltage of the voltage Vzvs at the point A shown in FIG. 14A.

While the trajectory can be defined, the phase-shift and the switching frequency required in the phase-shift switching mode is still unknown and for a smooth transition from the unipolar switching mode to the phase-shift switching mode, at least one of the relevant points in the trajectory should overlap with each other. In the condition shown in FIGS. 13A and 13B, and FIGS. 14A and 14B, the transition would happen at point A for a smooth transition and the condition for the transition remains as that the center and radius of the transition circles may be the same for the unipolar switching mode and the phase-shift switching mode. In one embodiment, the transition needs to happen at point A for smooth transition and the condition for the transition remains as that the center and radius of the transition circles needs to be the same for the unipolar switching mode and the phase-shift switching mode.

As shown in FIG. 13A, during the transition between point A to point C, the switching voltage V_{AB} is +V_{IN}, which is the s ame as the transition between point A to point D in embodiment of the phase-shift switching mode as shown in FIG. 14A. This implies that the center for both the trajectories are the same. The main challenge remains in equalizing the radius for both the trajectories shown in FIGS. 13B and 14B so that they overlap each other. This is carried out by varying the switching frequency, but one thing to make sure is that soft-switching is maintained for all the switches at all intervals. This is ensured by equation (7) shown below, ${I}_{a 12 , PS} = {I}_{a 11 , uni}$ (7)

With this condition, the radius of both the circles are equalized. A maximum switching frequency limit is set, and the phase-shift value is calculated while ensuring that the maximum frequency limit is not violated. The phase-shift value is selected so as to maintain equation (7). This would ensure a smooth transition between the unipolar mode and the phase-shift modulation technique.

Once the optimal values for the transition is chosen, the transition can be carried out smoothly at point A, with the duty cycle being calculated based on the previous equation (1).

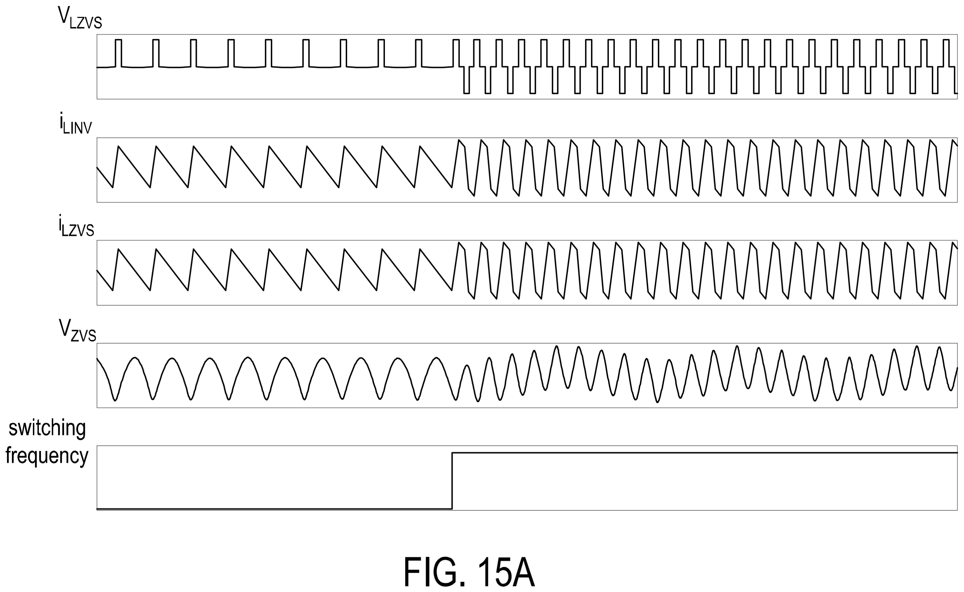

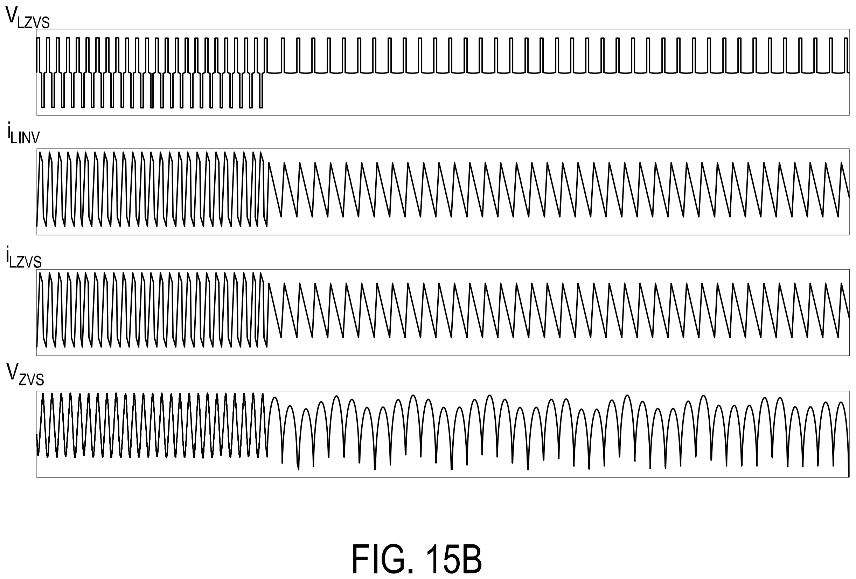

FIG. 15A schematically shows the transition from a unipolar switching mode to the phase-shift switching mode. The voltage V_{LZVS} across the ZVS inductor L_{ZVS} shows a smooth transition from a two-level mode to a three-level mode, which is brought upon by the phase-shift switching mode. Also, from the ripple of the current flowing through the boost inductor L_{boost} as well as the ZVS inductor L_{ZVS}, it is seen that the current ripple can be increased in the phase-shift switching mode. Due to the proper mode transition, it is seen that the voltage Vzvs across the ZVS branch capacitor Czvs does not change a lot and stays within reasonable limits. FIG. 15B shows the reverse scenario when the mode is changed from the phase-shift switching mode to the unipolar switching mode. Similar to the previous embodiment, the transition is smooth and the current and the voltage waveforms may immediately reach their steady state without any unwanted oscillations.

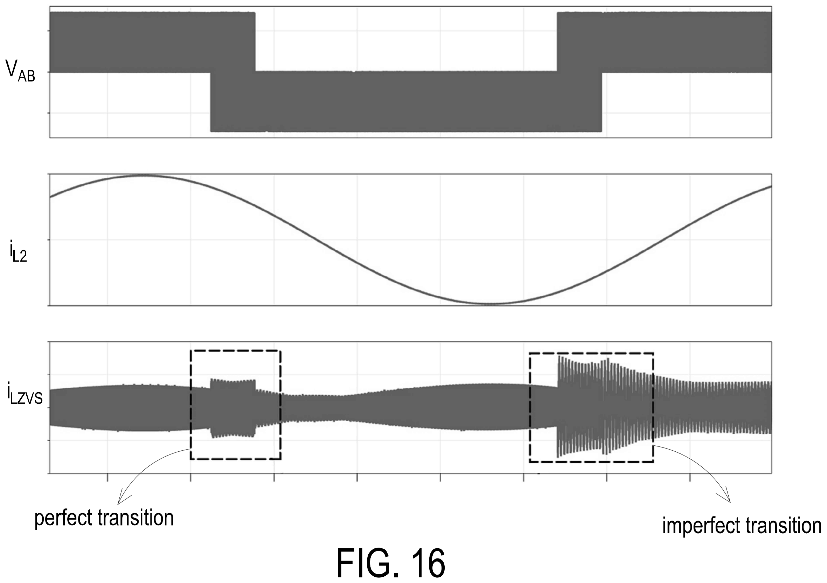

FIG. 16 shows two types of transitions in a line cycle for converter system 1 shown in FIG. 10A. The switching voltage V_{AB} is shown along with the grid current of the gird inductor L₂ and the current i_{LZVS} flowing through the ZVS inductor Lzvs. In the first scenario, there is a perfect transition which follows the mode transition based on the trajectory. This result is avoiding any unwanted oscillations in the current through the ZVS inductor Lzvs. The second scenario shows an imperfect transition. It is seen that even if the transition is carried out between the same two strategies, an imperfect transition time or duty cycle leads to unwanted oscillations and a much higher peak current that what is required. This proves the necessity to have the correct strategy to make the transition between two modes of operation otherwise which can result in unwanted operation of the converter system, and lead to sub-optimal design of the components in the system.

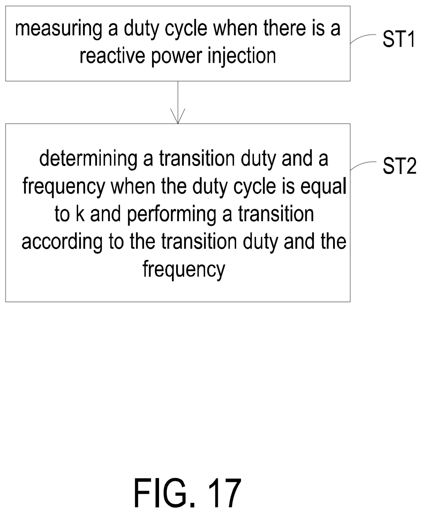

FIG. 17 is a schematic flow chart illustrating a control method of a converter system according to an embodiment of the present disclosure. The control method for a converter system of an embodiment of the present disclosure is applicable for the converter system 1 stated above. Refer to FIG. 17, the control method of the present embodiment includes steps ST1 and ST2. In the step ST1, a duty cycle is measured when there is a reactive power injection. In the step ST2, when the duty cycle is equal to k, a transition duty and a frequency are determined, and a transition is performed according to the transition duty and the frequency, wherein k is between 0.45 and 0.5. The transition includes the transition from the unipolar switching mode to the phase-shift switching mode or the transition from the phase-shift switching mode to the unipolar switching mode.

In an embodiment, the control method further includes steps of: in the unipolar switching mode, normalizing a ZVS capacitor voltage Vzvs of the ZVS capacitor Czvs and a ZVS inductor current i_{LZVS} flowing through ZVS inductor Lzvs into a unipolar normalized ZVS capacitor voltage V_{NZVS} and a unipolar normalized ZVS inductor current i_{NLZVS} respectively; and obtaining a first circle of the unipolar switching mode according to the unipolar normalized ZVS capacitor voltage V_{NZVS}; and obtaining a second circle of the unipolar switching mode according to the unipolar normalized ZVS inductor current i_{NLZVS}.

In an embodiment, the control method further includes steps of: in the bipolar switching mode, normalizing the ZVS capacitor voltage Vzvs of the ZVS capacitor Czvs and the ZVS inductor current i_{LZVS} flowing through ZVS inductor Lzvs into a bipolar normalized ZVS capacitor voltage V_{NZVS} and a bipolar normalized ZVS inductor current i_{NLZVS} respectively; and obtaining a first circle of the bipolar switching mode according to the bipolar normalized ZVS capacitor voltage V_{NZVS}, and obtaining a second circle of the bipolar switching mode according to the bipolar normalized - ZVS inductor current i_{NLZVS}.

In an embodiment, the control method further includes step of: determining a transition point of the unipolar switching mode and the bipolar switching mode according to the first circle and the second circle of the unipolar switching mode, and the first circle and the second circle of the bipolar switching mode.

The unipolar switching mode, phase-shift switching mode, and bipolar switching mode are determined based on at least one of phase-shift value between gate pulses of the first switch S1 and the second switch S2 and phase-shift value between gate pulses of the third switch S3 and the fourth switch S4.

In one embodiment, the control method performed by the controller 2 includes steps of controlling the converter system 1 to operate in the unipolar switching mode when the phase-shift value is 0. In one embodiment, the control method performed by the controller 2 includes steps of controlling the converter system 1 to operate in the bipolar switching mode when the phase-shift value is 180 degrees or approximately 180 degrees. In one embodiment, the control method performed by the controller 2 includes steps of controlling the converter system 1 to operate in the phase-shift switching mode when the phase-shift value is not 0 or 180 degrees.

It should be noted that in the embodiment the mode transition needs to be carried out only when there is not enough volt-seconds on the inductor to change the current sign. This value can be predetermined and the mode transition can be triggered irrespective of the amount of reactive power being injected into the system. The value of k is defined by the user but should typically lie between 0.45 and 0.5 since the inductor does not have enough volt-seconds during these duty cycles.

In the embodiment of the present disclosure, the soft-switching of the converter for the entire line cycle of operation is achieved. The converter is operated in the unipolar switching mode for most of the interval in the line cycle where the switching frequency is adjusted to obtain the required current ripple to ensure soft-switching. Close to the "zero ripple" points where it becomes impractical to control the current ripple using switching frequency variation, a mode-change is proposed to increase the current ripple, and obtain soft-switching. In normal operation, the converter operates under a unipolar switching mode, but after the mode change, a phase-shift switching mode is carried out. The phase-shift and the corresponding switching frequency can be determined based on an optimization technique.

The embodiment of the present disclosure is aimed at a mode transition technique in single-phase integrated triangular current control mode based single-phase AC/DC converters operating under non-unity power factor conditions. The embodiment of the present disclosure solves the challenge of the switches losing soft-switching at certain points in the line cycle during non-unity power factor operation by changing the mode strategy during certain intervals in the line cycle, hereby referred to as "dead intervals". In these intervals, under conventional mode scheme, the voltage across the inductor becomes zero, and hence controlling the inductor current to achieve soft-switching of the switches is not possible. The embodiment of the present disclosure provides a way to change the mode strategy by enabling a smooth mode transition between one strategy to the other. Further, the embodiment of the present disclosure also determines the switching frequency and phase-shift, and the proposed mode strategy is ideally capable of significantly reducing or even minimizing the frequency variation in the converter system.

From the above descriptions, the embodiment of the present disclosure provides a converter system, and the controller of the converter system controls to transit between a unipolar switching mode and a phase-shift switching mode according to a duty cycle k of the switching circuit of the converter system. Therefore, all the switches of the switching circuit may ensure soft-switching, thereby achieving ZVS.

## Claims

1. A converter system (1), **characterized by** comprising:
an AC source (Vac);
a DC output (Vdc), comprising a positive terminal (Vdc+) and a negative terminal (Vdc-);
a switching circuit, comprising a first switch (S1), a second switch (S2), a third switch (S3), and a fourth switch (S4), wherein the first switch (S1) and the second switch (S2) are electrically connected to the positive terminal (Vdc+) of the DC output (Vdc), and the third switch (S3) and the fourth switch (S4) are electrically connected to the negative terminal (Vdc-) of the DC output (Vdc), wherein the first switch (S1) and the third switch (S3) are electrically connected in series, and there is a first node (A) between the first switch (S1) and the third switch (S3), the second switch (S2) and the fourth switch (S4) are electrically connected in series, and there is a second node (B) between the second switch (S2) and the fourth switch (S4);
a boost inductor (L_{boost}), electrically connected to the second node (B);
a grid inductor (L₂), electrically connected between the AC source (Vac) and the boost inductor (L_{boost}), wherein the AC source (Vac)is electrically connected to the second node (B);
a ZVS inductor (L_{ZVS}) and a ZVS capacitor (C_{ZVS}) electrically connected in series between the first node (A) and the second node (B) to form a ZVS branch (11); and
a controller (2), configured to control the converter system (1) to transit between a unipolar switching mode and a phase-shift switching mode, or between a bipolar switching mode and the phase-shift switching mode, or between the unipolar switching mode and the bipolar switching mode according to a duty cycle of the switching circuit.

2. The converter system (1) according to claim 1, wherein in the unipolar switching mode, a capacitor voltage (V_{ZVS}) of the ZVS capacitor (C_{ZVS}) and a inductor current (I_{LZVS}) flowing through the ZVS inductor (L_{ZVS}) are normalized into a unipolar normalized ZVS capacitor voltage (V_{NZVS}) and a unipolar normalized ZVS inductor current (i_{NLZVS}) respectively by the controller (2), and the controller (2) is configured to obtain a first circle of the unipolar switching mode according to the unipolar normalized ZVS capacitor voltage (V_{NZVS}) and obtain a second circle of the unipolar switching mode according to the unipolar normalized ZVS inductor current (i_{NLZVS}).

3. The converter system (1) according to claim 2, wherein in the bipolar switching mode, the capacitor voltage (V_{ZVS}) of the ZVS capacitor (C_{ZVS}) and the inductor current (i_{LZVS}) flowing through ZVS inductor (L_{ZVS}) are normalized into a bipolar normalized ZVS capacitor voltage (V_{NZVS}) and a bipolar normalized ZVS inductor current (i_{NLZVS}) respectively by the controller (2), and the controller (2) is configured to obtain a first circle of the bipolar switching mode according to the bipolar normalized ZVS capacitor voltage (V_{NZVS}) and obtain a second circle of the bipolar switching mode according to the bipolar normalized ZVS inductor current (i_{NLZVS}).

4. The converter system (1) according to claim 3, wherein the controller (2) is configured to determine a transition point of the unipolar switching mode and the bipolar switching mode according to the first circle and the second circle of the unipolar switching mode, and the first circle and the second circle of the bipolar switching mode.

5. The converter system (1) according to any one of the above claims, wherein in the phase-shift switching mode, the capacitor voltage (V_{ZVS}) of the ZVS capacitor (C_{ZVS}) and the inductor current (i_{LZVS}) flowing through ZVS inductor (L_{ZVS}) are normalized into a phase-shift normalized ZVS capacitor voltage (V_{NZVS}) and a phase-shift normalized ZVS inductor current (i_{NLZVS}) respectively by the controller (2), and the controller is configured to obtain a first circle of the phase-shift switching mode according to the phase-shift normalized ZVS capacitor voltage (V_{NZVS}), obtain a second circle of the phase-shift switching mode according to the phase-shift normalized ZVS inductor current (i_{NLZVS}).

6. The converter system (1) according to claim 5, wherein the controller (2) is configured to determine a transition point of the unipolar switching mode and the phase-shift switching mode according to the first circle and the second circle of the unipolar switching mode, and the first circle, the second circle, and a third circle of the phase-shift switching mode, wherein the third circle of the phase-shift switching mode is obtained by the controller (2) based on the phase-shift normalized ZVS inductor current (i_{NLZVS}).

7. The converter system (1) according to any one of the above claims, wherein the unipolar switching mode, phase-shift switching mode, and bipolar switching mode are determined based on at least one of phase-shift value between gate pulses of the first switch and the second switch and phase-shift value between gate pulses of the third switch (S3) and the fourth switch (S4).

8. The converter system (1) according to claim 7, wherein the controller (2) is configured to control the converter system (1) to at least one of operating in the unipolar switching mode when the phase-shift value is approximately 0,
operating in the bipolar switching mode when the phase-shift value is approximately 180 degrees, and
operating in the phase-shift switching mode when the phase-shift value is not 0 or 180 degrees.

9. A control method of a converter system (1) according to any one of the above claims, **characterized in that** the control method comprises steps of:
(a) measuring a duty cycle of the converter system (1) when there is a reactive power injection; and
(b) determining a transition duty and a frequency when the duty cycle is equal to k, and performing a transition according to the transition duty and the frequency, wherein k is between 0.45 and 0.5, wherein the transition comprises at least one of transition from a unipolar switching mode to a phase-shift switching mode, transition from a phase-shift switching mode to the unipolar switching mode, transition from the bipolar switching mode to the phase-shift switching mode, transition from the phase-shift switching mode to the bipolar switching mode, transition from the unipolar switching mode to the bipolar switching mode, and transition from the bipolar switching mode to the unipolar switching mode.

10. The control method according to claim 9, further comprising steps of:
(c) in the unipolar switching mode, normalizing a ZVS capacitor voltage (V_{ZVS}) of the ZVS capacitor (C_{ZVS}) and a ZVS inductor current (i_{LZVS}) flowing through ZVS inductor (L_{ZVS}) into a unipolar normalized ZVS capacitor voltage (V_{NZVS}) and a unipolar normalized ZVS inductor current (i_{NLZVS}) respectively; and
(d) obtaining a first circle of the unipolar switching mode according to the unipolar normalized ZVS capacitor voltage (V_{NZVS}), and obtaining a second circle of the unipolar switching mode according to the unipolar normalized ZVS inductor current (i_{NLZVS}).

11. The control method according to claim 10, further comprising steps of:
(e) in the bipolar switching mode, normalizing the ZVS capacitor voltage (V_{ZVS}) of the ZVS capacitor (C_{ZVS}) and the ZVS inductor current (i_{LZVS}) flowing through ZVS inductor (L_{ZVS}) into a bipolar normalized ZVS capacitor voltage (V_{NZVS}) and a bipolar normalized ZVS inductor current (i_{NLZVS}) respectively; and
(f) obtaining a first circle of the bipolar switching mode according to the bipolar normalized ZVS capacitor voltage (V_{NZVS}), and obtaining a second circle of the bipolar switching mode according to the bipolar normalized ZVS inductor current (i_{NLZVS}).

12. The control method according to claim 11, further comprising a step of:
(g) determining a transition point of the unipolar switching mode and the bipolar switching mode according to the first circle and the second circle of the unipolar switching mode, and the first circle and the second circle of the bipolar switching mode.

13. The control method according to any one of claims 9-12, wherein the unipolar switching mode, phase-shift switching mode, and bipolar switching mode are determined based on at least one of phase-shift value between gate pulses of the first switch (S1) and the second switch (S2) and phase-shift value between gate pulses of the third switch (S3)and the fourth switch (S4).

14. The control method according to claim 13, further comprising at least one step of:
controlling the converter system (1) to operate in the unipolar switching mode when a phase-shift value is approximately 0;
controlling the converter system (1) to operate in the bipolar switching mode when a phase-shift value is approximately 180 degrees; and
controlling the converter system (1) to operate in the phase-shift switching mode when a phase-shift value is not 0 or 180-degree.
